(19) **Europäisches Patentamt** / **European Patent Office** / **Office européen des brevets**

(11) **EP 1 993 908 B1**

(12) **FASCICULE DE BREVET EUROPEEN**

(45) Date de publication et mention
de la délivrance du brevet:
**19.08.2009 Bulletin 2009/34**

(51) Int Cl.:
**B64D 31/10** *(2006.01)*   **G05D 1/00** *(2006.01)*

(21) Numéro de dépôt: **07731112.4**

(86) Numéro de dépôt international:
**PCT/FR2007/000415**

(22) Date de dépôt: **08.03.2007**

(87) Numéro de publication internationale:
**WO 2007/104851 (20.09.2007 Gazette 2007/38)**

(54) **PROCEDE ET DISPOSITIF DE COMMANDE DE LA POUSSEE D'UN AERONEF MULTIMOTEUR**

VERFAHREN UND VORRICHTUNG ZUR STEUERUNG DER SCHUBKRAFT EINES MEHRMOTORIGEN FLUGZEUGS

METHOD AND DEVICE FOR CONTROLLING THE THRUST OF A MULTI-ENGINE AIRCRAFT

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **15.03.2006 FR 0602249**

(43) Date de publication de la demande:
**26.11.2008 Bulletin 2008/48**

(73) Titulaire: **AIRBUS France**
**31060 Toulouse Cédex (FR)**

(72) Inventeurs:
• **LEMAIGNAN, Benoît**
**F-31400 Toulouse (FR)**
• **MATHIEU, Gérard**
**F-31820 Pibrac (FR)**

(74) Mandataire: **Hauer, Bernard**
**Cabinet Bonnétat**
**29, Rue de Saint-Pétersbourg**
**75008 Paris (FR)**

(56) Documents cités:
**EP-A1- 0 828 206**      **EP-A1- 1 139 190**
**EP-A2- 0 471 395**      **US-A- 4 884 205**

## Description

La présente invention concerne un procédé et un dispositif de commande de la poussée d'un aéronef, en particulier d'un avion de transport, de type multimoteur et notamment bimoteur.

On sait que généralement, sur un avion, la dérive (c'est-à-dire le plan fixe de l'empennage vertical de l'avion, qui est destiné à assurer la stabilité de route de ce dernier) et la gouverne de direction (c'est-à-dire un volet mobile qui est monté sur la dérive et qui est manoeuvrable dans le but de modifier la direction de l'avion) présentent des dimensions permettant à l'avion de satisfaire complètement différentes exigences de vol (de nature réglementaire ou non), telles qu'en particulier une vitesse minimale de commande pour un moteur en panne de type VMC.

On sait de plus qu'afin d'améliorer les performances (consommation de carburant, niveau de bruit, ...) d'un avion, sans diminuer la charge utile à transporter, les constructeurs sont amenés à diminuer le plus possible la masse de l'avion, c'est-à-dire la masse de la structure, d'organes, d'équipements, ..., et en particulier la masse de ladite dérive et de ladite gouverne de direction. Toutefois, en réduisant dans un tel but les dimensions de la dérive et de la gouverne de direction, on augmente mécaniquement la vitesse VMC précitée, ce qui pénalise les performances de l'avion, puisque lors d'une panne d'un moteur, la vitesse minimale à respecter est ainsi augmentée. Le document EP 0 828 206 décrit un procédé de commande de la poussée d'un aéronef multimoteur, conforme au préambule de la revendication 1.

La présente invention concerne un procédé de commande de la poussée d'un aéronef multimoteur, qui permet de remédier aux inconvénients précités.

A cet effet, selon l'invention, ledit procédé est remarquable en ce que :

a) on détermine un paramètre représentatif du poids courant de l'aéronef et on déduit ledit poids courant de ce paramètre. Ce paramètre peut être le poids courant lui-même ou l'incidence par exemple ;
b) on calcule une valeur de poussée réduite qui est proportionnelle audit poids courant déterminé à l'étape a) ;
c) on détermine au moins un ordre de commande des moteurs, qui est tel que s'il est appliqué aux moteurs non en panne dudit aéronef, ces derniers délivrent une poussée sensiblement égale à ladite valeur de poussée réduite calculée à l'étape b) ; et
d) on applique ledit ordre de commande déterminé à l'étape c) aux moteurs non en panne de l'aéronef.

Le procédé conforme à la présente invention peut être appliqué à un aéronef pour lequel tous les moteurs sont en fonctionnement. Toutefois, dans un mode de réalisation préféré, on surveille les moteurs de l'aéronef de manière à pouvoir détecter une panne d'un des moteurs, et on met en oeuvre les étapes a) et d) uniquement lorsqu'une panne d'un des moteurs est détectée.

Ainsi, grâce à l'invention, lors d'une panne d'un des moteurs de l'aéronef, on réduit la poussée (en fonction du poids de l'aéronef) du ou des moteurs non en panne de manière à réduire la pente, tout en garantissant une pente suffisante et également homogène, ce qui évite des attitudes de vol inhabituelles en cas de remise des gaz à une masse légère. Par conséquent, en réduisant le moment de lacet du ou des moteurs non en panne, on réduit la vitesse de commande-minimale VMC théorique pour tous les poids de l'aéronef. Ainsi, il est possible d'équilibrer l'aéronef en lacet sans avoir à braquer complètement la gouverne de direction. Ceci signifie que la vitesse ne sera pas limitée par la vitesse minimale VMC. Ainsi, les contraintes de performance dues à la vitesse minimale de commande pour un moteur en panne sont relâchées, et il peut être tiré le plein bénéfice des performances longitudinales de l'aéronef en diminuant sa vitesse de vol le cas échéant.

Par conséquent, un aéronef qui met en oeuvre le procédé conforme à l'invention réduit fortement les limitations de performance dues à la vitesse minimale VMC. Les différentes exigences de vol précitées peuvent ainsi être satisfaites quel que soit le poids de l'aéronef et quelle que soit sa vitesse. Ceci est, notamment, particulièrement avantageux pour un aéronef bimoteur. En effet, pour un aéronef bimoteur, la poussée d'un unique moteur doit pouvoir assurer une pente minimale réglementaire à forte masse. En conséquence de quoi, à faible masse, la poussée disponible sur un unique moteur est supérieure à celle nécessaire pour tenir la pente réglementaire.

En outre, le procédé conforme à l'invention permet également d'homogénéiser la pente et l'assiette en cas de remise des gaz, en particulier avec tous les moteurs en fonctionnement.

Dans un mode de réalisation préféré, à l'étape b), on calcule la valeur de poussée réduite FOEI à l'aide de l'expression suivante :

$$FOEI = m.g.(\gamma cons + 1/f)$$

dans laquelle :

◊ m.g est ledit poids courant, m étant la masse et g l'accélération de la pesanteur ;
◊ $\gamma$cons est une valeur de pente correspondant à une pente de consigne ; et
◊ f est le rapport courant entre la portance et la traînée de l'aéronef.

Dans ce mode de réalisation préféré, on calcule ladite valeur de pente $\gamma$cons à l'aide de l'expression suivante :

$$\gamma\text{cons} = \gamma\text{min} + \Delta\gamma$$

dans laquelle :

◊ $\gamma$min est une valeur de pente minimale réglementaire pour l'aéronef ; et
◊ $\Delta\gamma$ est une valeur de pente prédéterminée, par exemple quelques degrés.

En outre, dans un mode de réalisation particulier, à l'étape a), on détermine le poids courant de l'aéronef, en faisant la somme du poids de l'aéronef sans carburant et du poids (courant) du carburant présent à bord dudit aéronef.

Dans ce cas, avantageusement, lors d'une phase d'approche, on réalise de plus les opérations suivantes :

- avant l'étape d) :

  ■ on détermine une première valeur de poids de l'aéronef, en faisant la somme du poids de l'aéronef sans carburant et du poids du carburant présent à bord dudit aéronef ;
  ■ on détermine une seconde valeur de poids, en fonction de l'incidence courante de l'aéronef ;
  ■ on compare entre elles lesdites première et seconde valeurs de poids ; et

- à l'étape d) :

  ■ si lesdites première et seconde valeurs de poids sont égales à une marge près, on applique aux moteurs non en panne ledit ordre de commande déterminé à l'étape c) permettant d'obtenir une poussée sensiblement égale à la valeur de poussée réduite calculée à l'étape b) ; et
  ■ si lesdites première et seconde valeurs de poids sont différentes (au-delà de ladite marge), on applique aux moteurs non en panne un ordre de commande permettant d'obtenir une poussée prédéterminée constante, par exemple une poussée de type TOGA ("Take Off / Go Around" en anglais) c'est-à-dire pour un décollage ou une remise des gaz.

Ainsi, lorsque le poids courant (à savoir ladite première valeur de poids) qui est déterminé à l'aide du poids de carburant disponible à bord de l'aéronef et qui est utilisé pour déterminer la valeur de poussée réduite précitée, s'écarte d'une (seconde) valeur de poids qui est calculée en fonction de l'incidence courante, on n'applique pas ladite valeur de poussée réduite conforme à l'invention. En effet, dans ce cas, la valeur de poids obtenue à partir de l'incidence est généralement précise de sorte que le poids courant déterminé à l'étape a) présente probablement une valeur erronée, ce qui entraîne une valeur erronée de la valeur de poussée réduite calculée à l'étape b) et de l'ordre de commande déterminé à l'étape c) du procédé conforme à l'invention.

La présente invention concerne également un dispositif de commande de la poussée d'un aéronef multimoteur, en particulier d'un avion de transport multimoteur, et notamment d'un avion bimoteur.

Selon l'invention, ledit dispositif du type comportant, de préférence, des moyens pour surveiller les moteurs dudit aéronef de manière à pouvoir détecter une panne d'un desdits moteurs, est remarquable en ce qu'il comporte de plus :

- un premier moyen pour déterminer un paramètre représentatif du poids courant de l'aéronef et pour en déduire ledit poids courant ;
- un deuxième moyen pour calculer une valeur de poussée réduite qui est proportionnelle audit poids courant déterminé par ledit premier moyen ;
- un troisième moyen pour déterminer au moins un ordre de commande des moteurs, qui est tel que s'il est appliqué aux moteurs non en panne dudit aéronef, ces derniers délivrent une poussée sensiblement égale à ladite valeur de poussée réduite calculée par ledit deuxième moyen ; et
- un quatrième moyen pour appliquer ledit ordre de commande déterminé par ledit troisième moyen aux moteurs non en panne de l'aéronef.

Le dispositif conforme à l'invention permet ainsi, lors de la panne d'un moteur, d'adapter la poussée du ou des moteurs non en panne de manière à présenter des performances suffisantes mais avec une vitesse minimale de contrôle (de type VMC) plus faible et une assiette de vol plus homogène.

Les figures du dessin annexé feront bien comprendre comment l'invention peut être réalisée. Sur ces figures, des références identiques désignent des éléments semblables.

La figure 1 est le schéma synoptique d'un dispositif de commande conforme à l'invention.
La figure 2 illustre schématiquement un perfectionnement particulier d'un dispositif de commande conforme à l'invention.

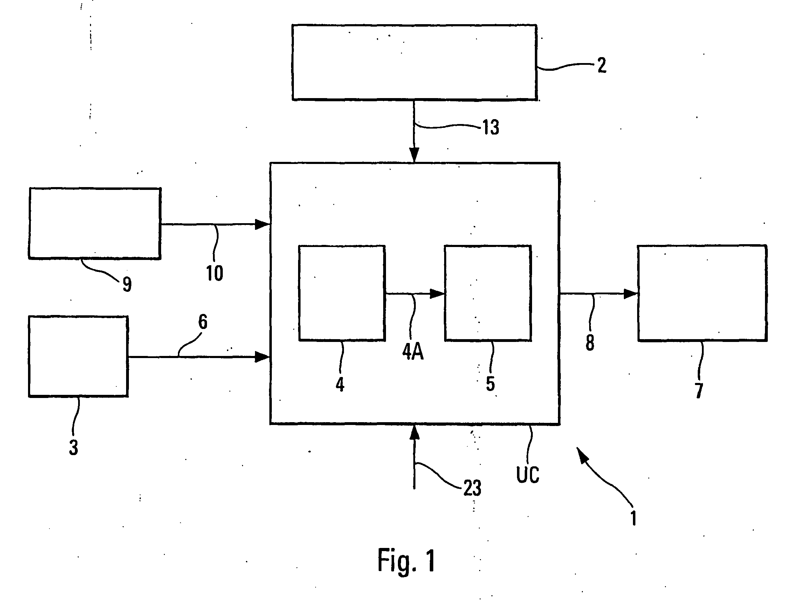

Le dispositif 1 conforme à l'invention et représenté schématiquement sur la figure 1 est destiné à commander la poussée d'un aéronef multimoteur, en particulier un avion de transport multimoteur, non représenté.

Bien que non exclusivement, ledit dispositif 1 s'applique plus particulièrement à un avion bimoteur et est utilisé, de préférence, au moins lors d'une phase d'approche en vue d'un atterrissage sur une piste d'atterrissage.

En outre, plus précisément, ledit dispositif 1 est destiné à être mis en oeuvre lors d'une panne d'un des moteurs (non représentés) dudit aéronef multimoteur. Pour ce faire, ledit dispositif 1 comporte des moyens 2 usuels, qui sont destinés à surveiller les moteurs de l'aéronef de manière à pouvoir détecter une panne d'un desdits moteurs.

Selon l'invention, ledit dispositif 1 comporte de plus :

- un moyen 3 pour déterminer un paramètre représentatif du poids courant de l'aéronef et pour en déduire ledit poids courant. Ce paramètre peut être directement le poids courant ou l'incidence par exemple qui permet de déterminer le poids courant à l'aide d'une équation usuelle de sustentation ;
- un moyen 4 pour calculer une valeur de poussée réduite qui est proportionnelle au poids courant déterminé par ledit moyen 3 ;
- un moyen 5 qui est relié par l'intermédiaire d'une liaison 4A audit moyen 4, et qui est formé de manière à déterminer au moins un ordre de commande des moteurs. Cet ordre de commande est tel que s'il est appliqué au(x) moteur(s) non en panne de l'aéronef, ce(s) dernier(s) délivre(nt) une poussée sensiblement égale à ladite valeur de poussée réduite calculée par ledit moyen 4. Dans un mode de réalisation particulier, lesdits moyens 4 et 5 font partie d'une unité centrale UC qui est, par exemple, reliée par l'intermédiaire d'une liaison 6 audit moyen 3 et par l'intermédiaire d'une liaison 13 auxdits moyens 2 ; et
- un moyen 7 usuel, qui est relié par l'intermédiaire d'une liaison 8 à ladite unité centrale UC et qui est formé de manière à appliquer ledit ordre de commande déterminé par le moyen 5 au(x) moteur(s) non en panne de l'aéronef. Ce moyen usuel 7 peut, par exemple, fournir un ordre de commande à un système de commande numérique de moteur à pleine autorité de type FADEC ("Full Authority Digital Engine Control" en anglais).

Ainsi, lors d'une panne d'un des moteurs de l'aéronef, le dispositif 1 conforme à l'invention réduit la poussée (et ceci en fonction du poids de l'aéronef) du ou des moteurs valides de manière à réduire la pente dudit aéronef, tout en garantissant une pente suffisante pour réaliser les manoeuvres prévues. Par conséquent, en réduisant le moment de lacet du ou des moteurs non en panne, on réduit la vitesse de commande minimale VMC théorique pour tous les poids de l'aéronef. Ainsi, il est possible d'équilibrer l'aéronef en lacet sans avoir à braquer complètement sa gouverne de direction. Ceci signifie que la vitesse ne sera pas limitée par la vitesse minimale VMC. Ainsi, les contraintes de performance dues à la vitesse minimale de commande pour un moteur en panne sont relâchées, et il peut être tiré le plein bénéfice des performances longitudinales de l'aéronef en diminuant sa vitesse de vol le cas échéant.

Par conséquent, un aéronef qui utilise le dispositif 1 conforme à l'invention réduit fortement les limitations de performance dues à la vitesse minimale VMC. Différentes exigences de vol peuvent ainsi être satisfaites quel que soit le poids de l'aéronef et quelle que soit sa vitesse. Ceci est particulièrement avantageux pour un aéronef bimoteur.

En outre, le dispositif 1 conforme à l'invention présente également l'avantage de pouvoir être utilisé même lorsque tous les moteurs de l'aéronef fonctionnent, pour homogénéiser l'assiette, pour protéger les moteurs et donc diminuer leur endommagement, ce qui procure en particulier des gains en coûts de maintenance.

Dans un mode de réalisation préféré, le moyen 4 calcule la valeur de poussée réduite FOEI à l'aide de la relation suivante :

$$FOEI = m.g.(\gamma cons + 1/f)$$

dans laquelle :

◊ m.g est ledit poids courant, m étant la masse et g l'accélération de la pesanteur;
◊ γcons est une valeur de pente de l'aéronef, correspondant à une pente de consigne ; et
◊ f est le rapport courant entre la portance et la traînée de l'aéronef.

Dans ce mode de réalisation préféré, ledit moyen 4 calcule également ladite valeur de pente γcons, et ceci à l'aide de l'expression suivante :

$$\gamma cons = \gamma min + \Delta\gamma$$

dans laquelle :

◊ γmin est une valeur de pente minimale réglementaire pour l'aéronef ; et
◊ Δγ est une valeur de pente prédéterminée, par exemple 0,5°.

Ledit dispositif 1 comporte également un ensemble 9 de sources d'informations, qui est relié par l'intermédiaire d'une liaison 10 à ladite unité centrale UC et qui est susceptible de fournir à cette dernière les valeurs d'une pluralité de paramètres, et notamment ledit rapport courant f précité.

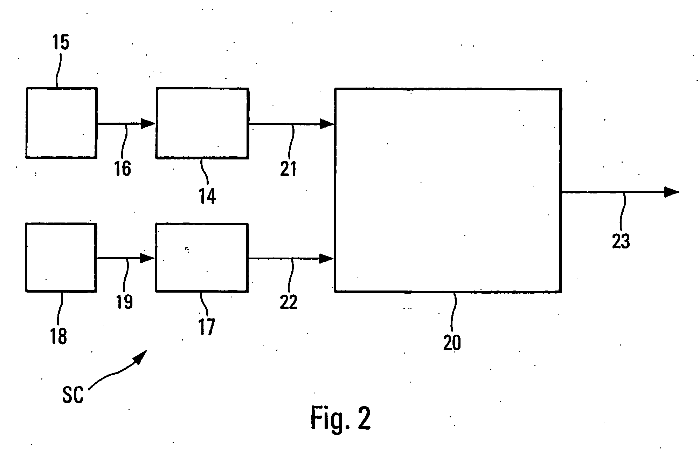

Dans un mode de réalisation particulier, ledit dispositif 1 comporte, de plus, un système de contrôle SC représenté schématiquement sur la figure 2. Ce système de contrôle SC qui est utilisé de préférence lors d'une approche en vue d'un atterrissage, comporte notamment :

- un moyen 14 qui est par exemple similaire audit moyen 3 ou correspond à ce moyen 3, et qui est formé de manière à déterminer une première valeur de poids de l'aéronef. Pour ce faire, ledit moyen 14 fait (comme le moyen 3) la somme du poids de l'aéronef sans carburant et du poids du carburant présent à bord de l'aéronef. De façon usuelle, le poids de l'aéronef sans carburant est déterminé par le pilote et est entré par ce dernier dans le dispositif 1 à l'aide d'un moyen d'entrée 15 usuel, en particulier une unité d'affichage et de contrôle multifonction de type MCDU ("Multifunction Control Display Unit" en anglais), qui est relié par l'intermédiaire d'une liaison 16 audit moyen 14 ;

- un moyen 17 qui détermine de façon usuelle une seconde valeur de poids, en fonction de l'incidence courante de l'aéronef, qui est par exemple reçue d'un moyen 18 usuel, ce dernier étant relié par l'intermédiaire d'une liaison 19 audit moyen 17. Ce moyen 18 peut faire partie dudit ensemble 9 de sources d'informations. De plus, ledit moyen 17 comporte un modèle usuel permettant de déterminer ladite seconde valeur de poids, à partir de l'équation de sustentation par exemple, basée sur une mesure de l'incidence de vol. Corrélée à la vitesse, la masse s'en déduit ; et

- un moyen 20 qui est relié par l'intermédiaire de liaisons 21 et 22 auxdits moyens 14 et 17 et qui est destiné à comparer entre elles lesdites première et seconde valeurs de poids et à émettre un ordre en fonction de cette comparaison.

Selon l'invention, ledit moyen 20 a pour objet d'inhiber l'application de la valeur de poussée réduite précitée au(x) moteur(s) non en panne, lorsque lesdites première et seconde valeurs de poids sont différentes l'une de l'autre. Pour ce faire, ledit moyen 20 peut, par exemple, transmettre un ordre d'inhibition à ladite unité centrale UC par l'intermédiaire d'une liaison 23.

Ainsi, grâce audit système de contrôle SC :

- si les première et seconde valeurs de poids sont égales (à une marge près, par exemple à quelques pour cent de la masse courante près), le dispositif 1 applique au(x) moteur(s) non en panne ledit ordre de commande qui est déterminé par le moyen 5 et qui permet d'obtenir une poussée sensiblement égale à la valeur de poussée réduite calculée par le moyen 4 ; et

- si lesdites première et seconde valeurs de poids sont différentes l'une de l'autre (au-delà de ladite marge), le dispositif 1 applique au(x) moteur(s) non en panne un ordre de commande usuel permettant d'obtenir une poussée prédéterminée constante, par exemple une poussée de type TOGA ("Take Off / Go Around" en anglais) c'est-à-dire une poussée usuelle prédéterminée pour un décollage ou une remise des gaz.

Par conséquent, lorsque le poids courant (à savoir ladite première valeur de poids) qui est déterminé par le moyen 14 à l'aide du poids de carburant disponible à bord de l'aéronef et qui est utilisé pour déterminer la valeur de poussée réduite précitée, s'écarte d'une valeur de poids qui est calculée par le moyen 17 en fonction de l'incidence courante, le dispositif 1 conforme à l'invention n'applique pas ladite valeur de poussée réduite. En effet, lors d'une approche (pendant laquelle est activée de préférence ledit système de contrôle SC), la valeur de poids obtenue à partir de l'incidence est généralement précise de sorte que le poids courant déterminé par les moyens 14 et 3 présente alors probablement une valeur erronée, ce qui entraîne une valeur erronée de la valeur de poussée réduite calculée par le moyen 4, ainsi que de l'ordre de commande déterminé par le moyen 5.

**Revendications**

1. Procédé de commande de la poussée d'un aéronef multimoteur, procédé selon lequel :

c) on détermine au moins un ordre de commande des moteurs, qui est tel que s'il est appliqué aux moteurs non en panne dudit aéronef, ces derniers délivrent une poussée sensiblement égale à une valeur de poussée réduite ; et
d) on applique ledit ordre de commande déterminé à l'étape c) aux moteurs non en panne de l'aéronef,

**caractérisé en ce que,** pour déterminer ladite valeur de poussée réduite utilisée à l'étape c) :

a) on détermine un paramètre représentatif du poids courant de l'aéronef et on déduit ledit poids courant de ce paramètre ; et
b) on calcule, comme valeur de poussée réduite, une valeur de poussée réduite FOEI qui est proportionnelle audit poids courant, et ceci à l'aide de l'expression suivante :

$$\text{FOEI} = m.g.(\gamma\text{cons} + 1/f)$$

dans laquelle :

◊ m.g est ledit poids courant, m étant la masse et g l'accélération de la pesanteur ;
◊ γcons est une valeur de pente correspondant à une pente de consigne ; et
◊ f est le rapport courant entre la portance et la traînée de l'aéronef.

2. Procédé selon la revendication 1, **caractérisé en ce que**, lors d'un vol de l'aéronef, on surveille les moteurs dudit aéronef de manière à pouvoir détecter une panne d'un desdits moteurs, et on met en oeuvre les étapes a) et d) uniquement lorsqu'une panne d'un desdits moteurs est détectée.

3. Procédé selon l'une des revendications 1 et 2, **caractérisé en ce que** l'on calcule ladite valeur de pente γcons à l'aide de l'expression suivante :

$$\gamma cons \ = \ \gamma min + \Delta\gamma$$

dans laquelle :

◊ γmin est une valeur de pente minimale réglementaire pour l'aéronef ; et
◊ Δγ est une valeur de pente prédéterminée.

4. Procédé selon l'une quelconque des revendications précédentes, **caractérisé en ce qu'**à l'étape a), on détermine le poids courant de l'àéronef, en faisant la somme du poids de l'aéronef sans carburant et du poids du carburant présent à bord dudit aéronef.

5. Procédé selon l'une quelconque des revendications précédentes, **caractérisé en ce que,** lors d'une phase d'approche, on réalise de plus les opérations suivantes :

- avant l'étape d) :

. on détermine une première valeur de poids de l'aéronef, en faisant la somme du poids de l'aéronef sans carburant et du poids du carburant présent à bord dudit aéronef ;
. on détermine une seconde valeur de poids, en fonction de l'incidence courante de l'aéronef ;
. on compare entre elles lesdites première et seconde valeurs de poids ; et

- à l'étape d) :

. si lesdites première et seconde valeurs de poids sont égales à une marge près, on applique aux moteurs non en panne ledit ordre de commande permettant d'obtenir une poussée sensiblement égale à la valeur de poussée réduite calculée à l'étape b) ; et si lesdites première et seconde valeurs de poids sont différentes, on applique aux moteurs non en panne un ordre de commande permettant d'obtenir une poussée prédéterminée constante.

6. Dispositif de commande de la poussée d'un aéronef multimoteur, ledit dispositif comportant :

- un moyen (5) pour déterminer au moins un ordre de commande des moteurs, qui est tel que s'il est appliqué aux moteurs non en panne dudit aéronef, ces derniers délivrent une poussée sensiblement égale à une valeur de poussée réduite ; et
- un moyen (7) pour appliquer ledit ordre de commande ainsi déterminé aux moteurs non en panne de l'aéronef,

**caractérisé en ce qu'**il comporte de plus :

- un moyen (3) pour déterminer un paramètre représentatif du poids courant de l'aéronef et pour en déduire ledit poids courant ; et
- un moyen (4) pour calculer, comme valeur de poussée réduite, une valeur de poussée réduite FOEI qui est proportionnelle audit poids courant, et ceci à l'aide de l'expression suivante :

$$FOEI \ = \ m.g.(\gamma cons + 1/f)$$

dans laquelle :

◊ m.g est ledit poids courant, m étant la masse et g l'accélération de la pesanteur ;
◊ γcons est une valeur de pente correspondant à une pente de consigne ; et
◊ f est le rapport courant entre la portance et la traînée de l'aéronef.

7. Aéronef,
**caractérisé en ce qu'**il comporte un dispositif (1) tel que celui spécifié sous la revendication 6.

**Claims**

1. A method for controlling the thrust of a multi-engine aircraft, in which method:

c) at least one engine command is determined, which command is such that, if applied to those engines of said aircraft that have not failed, these engines deliver a thrust substantially equal to a reduced thrust value; and
d) said command determined in step c) is applied to those engines of the aircraft that have not failed,

**characterized in that,** in order to determine said reduced thrust value used in step c):

a) a parameter representative of the current weight of the aircraft is determined and said current weight is deduced from this parameter; and
b) by way of reduced thrust value, a reduced thrust value FOEI is calculated which is proportional to said current weight, this being done using the following expression:

$$FOEI = m.g. (\gamma cons + 1/f)$$

in which:

◊ m.g. is said current weight, m being the mass and g the acceleration due to gravity;
◊ γcons is a gradient value corresponding to a reference gradient; and
◊ f is the current ratio between the lift and the drag of the aircraft.

2. The method as claimed in claim 1, **characterized in that**, while the aircraft is in flight, the engines of said aircraft are monitored in such a way as to be able to detect a failure of one of said engines, and steps a) and d) are performed only when a failure of one of said engines is detected.

3. The method as claimed in one of claims 1 and 2, **characterized in that** said gradient value γcons is calculated using the following expression:

$$\gamma cons = \gamma min + \Delta\gamma$$

in which:

◊ γmin is a regulatory minimal gradient value for the aircraft; and
◊ Δγ is a predetermined gradient value.

4. The method as claimed in any one of the preceding claims, **characterized in that** in step a) the current weight of the aircraft is determined by summing the weight of the aircraft without fuel and the weight of fuel present on board said aircraft.

5. The method as claimed in any one of the preceding claims, **characterized in that**, during an approach phase, the following operations are also performed:

- prior to step d):

• a first aircraft weight value is determined by summing the weight of the aircraft without fuel and the weight of fuel present on board said aircraft;
• a second weight value is determined as a function of the current angle of attack of the aircraft;
• said first and second weight values are compared with one another; and

- in step d):

• if said first and second weight values are equal, give or take a margin, then said command is applied to those engines which have not failed in order to obtain a thrust substantially equal to the reduced thrust value calculated in step b); and
• if said first and second weight values are different, a command is applied to those engines which have not failed in order to obtain a constant predetermined thrust.

6. A device for controlling the thrust of a multi-engine aircraft, said device comprising:

- a means (5) for determining at least one engine command which is such that, if applied to those engines that have not failed, these engines deliver a thrust substantially equal to a reduced thrust value; and
- a means (7) for applying said command thus determined to those engines of the aircraft that have not failed,

**characterized in that** it additionally includes:

- a means (3) for determining a parameter representative of the current weight of the aircraft and for deducing said current weight from this; and
- a means (4) for calculating, by way of reduced thrust value, a reduced thrust value FOEI which is proportional to said current weight, and doing so using the following expression:

$$FOEI = m.g. (\gamma cons + 1/f)$$

in which:

◊ m.g. is said current weight, m being the mass and g the acceleration due to gravity;
◊ γcons is a gradient value corresponding to a reference gradient; and
◊ f is the current ratio between the lift and the drag of the aircraft.

7. An aircraft, **characterized in that** it comprises a device (1) like the one specified in claim 6.

**Patentansprüche**

1. Verfahren zur Steuerung der Schubkraft eines Flugzeugs mit mehreren Triebwerken, wobei bei dem Verfahren:

   c) mindestens ein Steuerbefehl der Triebwerke bestimmt wird, der derart bestimmt ist, dass - wenn er auf die nicht ausgefallenen Triebwerke des Flugzeugs angewandt wird - Letztere eine Schubkraft liefern, die im Wesentlichen gleich einem reduzierten Schubwert ist und
   d) der in Schritt c) bestimmte Steuerbefehl auf die nicht ausgefallenen Triebwerke des Flugzeugs angewandt wird,

   **dadurch gekennzeichnet, dass** zum Bestimmen des in Schritt c) verwendeten reduzierten Schubwerts:

   a) ein für das aktuelle Gewicht des Flugzeugs repräsentativer Parameter bestimmt wird und das aktuelle Gewicht aus diesem Parameter abgeleitet wird und
   b) als reduzierter Schubwert ein reduzierter Schubwert FOEI, der zu dem aktuellen Gewicht proportional ist, berechnet wird und zwar mithilfe des folgenden Ausdrucks:

   $$FOEI = m.g.(\gamma cons + 1/f)$$

   in dem:

   ◊ m.g das aktuelle Gewicht ist, wobei m die Masse und g die Erdbeschleunigung ist,
   ◊ γcons ein Steigungswert ist, der einer Sollsteigung entspricht und
   ◊ f das aktuelle Verhältnis zwischen dem Auftrieb und dem Luftwiderstand des Flugzeugs ist.

2. Verfahren nach Anspruch 1,
   **dadurch gekennzeichnet, dass** während eines Fluges des Flugzeugs die Triebwerke des Flugzeugs derart überwacht werden, dass ein Ausfall eines der Triebwerke detektierbar ist und die Schritte a) und d) ausschließlich ausgeführt werden, wenn ein Ausfall eines der Triebwerke detektiert wird.

3. Verfahren nach Anspruch 1 oder 2,
   **dadurch gekennzeichnet, dass** der Steigungswert γcons mithilfe des folgenden Ausdrucks berechnet wird:

   $$\gamma cons = \gamma min + \Delta\gamma$$

in dem:

   ◊ γmin ein vorschriftsmäßiger minimaler Steigungswert für das Flugzeug ist und,
   ◊ Δγ ein vorgegebener Steigungswert ist.

4. Verfahren nach einem der vorhergehenden Ansprüche,
   **dadurch gekennzeichnet, dass** in Schritt a) das aktuelle Gewicht des Flugzeugs durch Summieren des Gewichts des Flugzeugs ohne Treibstoff und des Gewichts des an Bord des Flugzeugs vorhandenen Treibstoffs bestimmt wird.

5. Verfahren nach einem der vorhergehenden Ansprüche,
   **dadurch gekennzeichnet, dass** in einer Anflugphase außerdem die folgenden Verfahrensschritte ausgeführt werden:

   - vor Schritt d):

     • wird ein erster Gewichtswert des Flugzeugs durch Summieren des Gewichts des Flugzeugs ohne Treibstoff und des Gewichts des an Bord des Flugzeugs vorhandenen Treibstoffs bestimmt,
     • wird ein zweiter Gewichtswert in Abhängigkeit von dem aktuellen Anstellwinkel des Flugzeugs bestimmt,
     • werden der erste und der zweite Gewichtswert miteinander verglichen und

   - in Schritt d):

     • wird, wenn der erste und der zweite Gewichtswert bis auf eine Toleranz gleich sind, der Steuerbefehl, der es ermöglicht eine Schubkraft zu erhalten, die im Wesentlichen gleich dem in Schritt b) berechneten reduzierten Schubwert ist, auf die nicht ausgefallenen Triebwerke angewandt und
     • wird, wenn der erste und der zweite Gewichtswert unterschiedlich sind, ein Steuerbefehl auf die nicht ausgefallenen Triebwerke angewandt, der es ermöglicht, eine vorgegebene konstante Schubkraft zu erhalten.

6. Vorrichtung zur Steuerung der Schubkraft eines Flugzeugs mit mehreren Triebwerken, wobei die Vorrichtung Folgendes umfasst:

   - ein Mittel (5), um mindestens einen Steuerbefehl der Triebwerke zu bestimmen, der derart bestimmt ist, dass - wenn er auf die nicht ausgefallenen Triebwerke des Flugzeugs angewandt wird - Letztere eine Schubkraft liefern, die im Wesentlichen gleich einem reduzierten Schubwert ist und
- ein Mittel (7), um den auf diese Weise bestimmten Steuerbefehl auf die nicht ausgefallenen Triebwerke des Flugzeugs anzuwenden,

**dadurch gekennzeichnet, dass** sie zusätzlich Folgendes umfasst:

- ein Mittel (3), um einen für das aktuelle Gewicht des Flugzeugs repräsentativen Parameter zu bestimmen und um daraus das aktuelle Gewicht abzuleiten und
- ein Mittel (4), um als reduzierten Schubwert einen reduzierten Schubwert FOEI, der zu dem aktuellen Gewicht proportional ist, zu berechnen und zwar mithilfe des folgenden Ausdrucks:

$$FOEI = m.g.(\gamma cons + 1/f)$$

in dem:

◊ m.g das aktuelle Gewicht ist, wobei m die Masse und g die Erdbeschleunigung ist,
◊ γcons ein Steigungswert ist, der einer Sollsteigung entspricht und
◊ f das aktuelle Verhältnis zwischen dem Auftrieb und dem Luftwiderstand des Flugzeugs ist.

7. Flugzeug,
**dadurch gekennzeichnet, dass** es eine Vorrichtung (1) wie die unter Anspruch 6 spezifizierte umfasst.

Fig. 1

Fig. 2

**EP 1 993 908 B1**

**RÉFÉRENCES CITÉES DANS LA DESCRIPTION**

**Documents brevets cités dans la description**

- EP 0828206 A